# EUROPEAN PATENT APPLICATION

(11) **EP 3 254 874 A1**
(43) Date of publication of application: **13.12.2017**
(21) Application number: 16173612.9
(22) Date of filing: 08.06.2016
(51) Int. Cl.: B60H 1/32, B60H 1/20, F25B 17/08, F25B 27/02

(54) **AN IMPROVED COOLING SYSTEM FOR A VEHICLE CAB**

(71) Applicant: Perkins Engines Company Limited, Peterborough, PE1 5NA (GB)
(72) Inventor: ROLFE, Craig, Ash, Aldershot Hampshire, GU12 6AF (GB); STRASHNY, Igor, Peoria, Illinois 61656 (US); HERD, Stephen, Huntingdon Gambridgeshire, PE26 1EX (GB); SLOUGH, Wesley, Bloomington, Indiana 61704 (US)
(74) Representative: Murgitroyd & Company

(57) **Abstract**

A sorption cooling system (10) for a vehicle cab is provided. The system comprises a cooling chamber (17) having an ambient air intake (31) and comprising first sorption vessels (12a,14a) containing a sorption solution located in the cooling chamber (17) and in fluid communication with second sorption vessels located outside the cooling chamber. An engine exhaust passage (33) has apertures (48,50) to the cooling chamber (17). A moveable flap (38) is located within the cooling chamber (17) so as to divide it into a first chamber portion (34) containing one of the first sorption vessels (12a), and a second chamber portion (36) containing the other of the first sorption vessels (14a). The flap (38) is moveable between a first position and a second position in which exhaust gas flows from the at least one exhaust aperture (50) through the second chamber portion (36) whilst ambient air flows from the air intake (31) through the first chamber portion (34) and vice versa.

## Description

### Field of the invention

The present invention relates to cooling systems for vehicle cabs, and in particular cooling systems for vehicle cabs which use the waste heat from exhaust gases of the vehicle.

### Background of the invention

It is known for vehicle cooling and air conditioning systems to use the waste heat of the engine exhaust as part of an absorption system in order to provide cold air to the interior of the vehicle. WO90/00479 discloses an air conditioning system which provides continuous cooling to the cabin of a vehicle by way of a pair of sorption vessels through which exhaust gases are selectively passed.

Specifically, WO'479 discloses two sorption vessels in sealed circuits and a diverter valve which can selectively divert exhaust gas through one of the sorption vessel arrangements while the other vessel is receiving a flow of ambient cooling air.

The diverter valve used to selectively divert ambient air or exhaust gas over each sorption vessel arrangement is a three-way valve and the system requires additional pipework to connect the exhaust to the system. A three-way valve employed for this purpose is costly to manufacture and susceptible to wear after long periods of use, whilst the additional pipework also adds to the cost of the system.

It is an aim of the present invention to obviate or mitigate these disadvantages in such prior art systems.

### Summary of the invention

According to a first aspect of the present invention there is provided a cooling system for a vehicle cab where the vehicle has an internal combustion engine, the system comprising:
a cooling chamber having an ambient air intake;
first and second pairs of sorption vessels, each pair of sorption vessels comprising a first sorption vessel containing a sorption solution which is located in the cooling chamber and is in fluid communication with a second sorption vessel located outside the cooling chamber;
first and second cooling circuits, each circuit containing a coolant and being in heat exchange contact with a respective one of the second sorption vessels;
a first control valve which selectively directs coolant from the first or the second cooling circuit towards the cab;
an exhaust passage conveying exhaust gases away from the engine, the exhaust passage having at least one exhaust aperture in communication with the cooling chamber; and
a moveable flap located within the cooling chamber so as to divide the cooling chamber into a first chamber portion containing one of the first sorption vessels, and a second chamber portion containing the other of the first sorption vessels,
wherein the moveable flap is moveable between: (i) a first position in which exhaust gas flows from the at least one exhaust aperture through the first chamber portion whilst ambient air flows from the air intake through the second chamber portion, and (ii) a second position in which exhaust gas flows from the at least one exhaust aperture through the second chamber portion whilst ambient air flows from the air intake through the first chamber portion.

According to a second aspect of the present invention there is provided a vehicle comprising:
an internal combustion engine;
a cab; and
the cooling system according to the first aspect of the invention.

According to a third aspect of the present invention there is provided a method of continuously cooling a vehicle cab where the vehicle comprises:
an internal combustion engine;
a cooling chamber having an ambient air intake;
first and second pairs of sorption vessels, each pair of sorption vessels comprising a first sorption vessel containing a sorption solution which is located in the cooling chamber and is in fluid communication with a second sorption vessel located outside the cooling chamber;
first and second cooling circuits, each circuit containing a coolant and being in heat exchange contact with a respective one of the second sorption vessels;
a first control valve which selectively directs coolant from the first or the second cooling circuit towards the cab;
an exhaust passage conveying exhaust gases away from the engine, the exhaust passage having at least one exhaust aperture in communication with the cooling chamber; and
a moveable flap located within the cooling chamber so as to divide the cooling chamber into a first chamber portion containing one of the first sorption vessels, and a second chamber portion containing the other of the first sorption vessels; the method comprising the steps of:
   (i) moving the moveable flap to a first position in which exhaust gas flows from the at least one exhaust aperture through the first chamber portion whilst ambient air flows from the air intake through the second chamber portion;
   (ii) simultaneously actuating the first control valve such that coolant is directed from the first cooling circuit towards the cab;
   (iii) after a predetermined period of time or in response to a control signal moving the moveable flap from the first position to a second position in which exhaust gas flows from the at least one exhaust aperture through the second chamber portion whilst ambient air flows from the air intake through the first chamber portion;
   (iv) simultaneously actuating the first control valve such that coolant is directed from the second cooling circuit towards the cab; and
   (v) after a predetermined period of time or in response to a control signal repeating steps (i)-(iv).

### Brief Description of the Drawings

Preferred embodiments of the present invention will now be described, by way of example only, with reference to the accompanying drawings, in which:
Figure 1 shows a front perspective view of a cooling system for a vehicle cab according to an embodiment of the present invention;
Figure 2 shows a rear perspective view of the cooling system for a vehicle cab of Figure 1;
Figure 3 shows a plan view of the cooling system for a vehicle cab of Figure 1;
Figure 4 shows a side view of the cooling system for a vehicle cab of Figure 1;
Figure 5 shows a horizontal section view of the cooling system for a vehicle cab of Figure 1 in a first state;
Figure 6 shows a horizontal section view of the cooling system for a vehicle cab of Figure 1 in a second state;
Figure 7 shows a detail view of the cooling system for a vehicle cab of Figure 1;
Figure 8 shows a horizontal section view of the cooling system for a vehicle cab of Figure 1 in a third state; and
Figure 9 shows a schematic view of the cooling system of Figure 1.

### Detailed Description of the Drawings

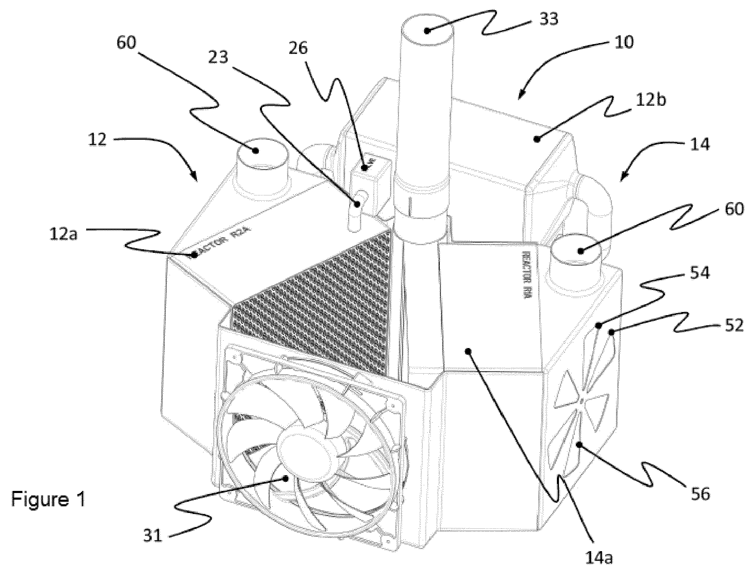

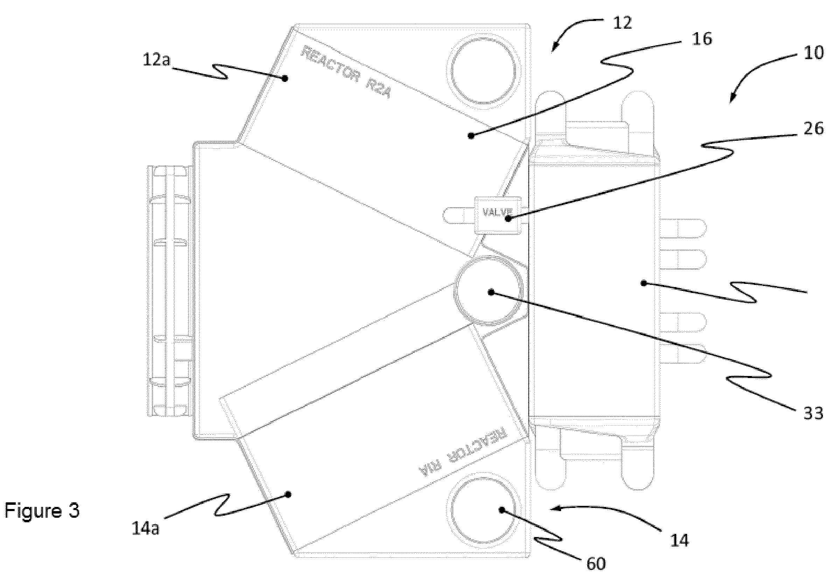

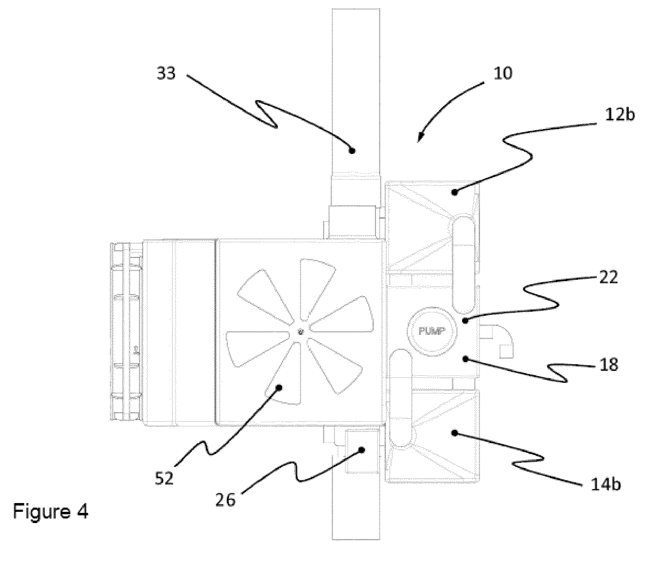

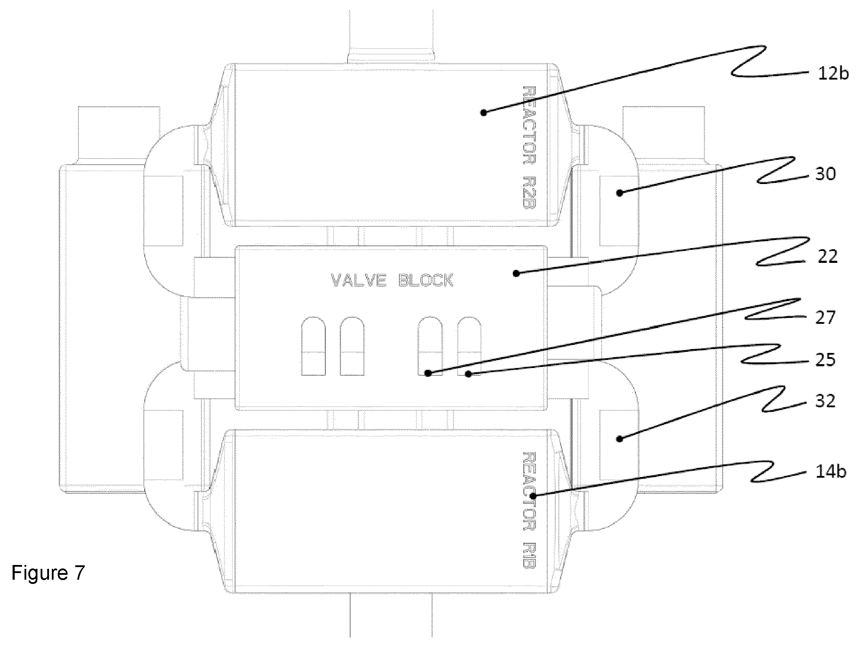

With reference to Figures 1 to 9, there is shown a cooling system 10 for continuously cooling a vehicle cab 13 which has an internal combustion engine 11, hereinafter referred to as the cooling system 10. The cooling system 10 includes first and second pairs of sorption vessels 12, 14. Each pair of sorption vessels 12, 14 comprises a first sorption vessel 12a, 14a and a second sorption vessel 12b, 14b. The first sorption vessels 12a, 14a are located inside of a cooling chamber 17, and the second sorption vessels 12b, 14b are located outside of the cooling chamber 17.

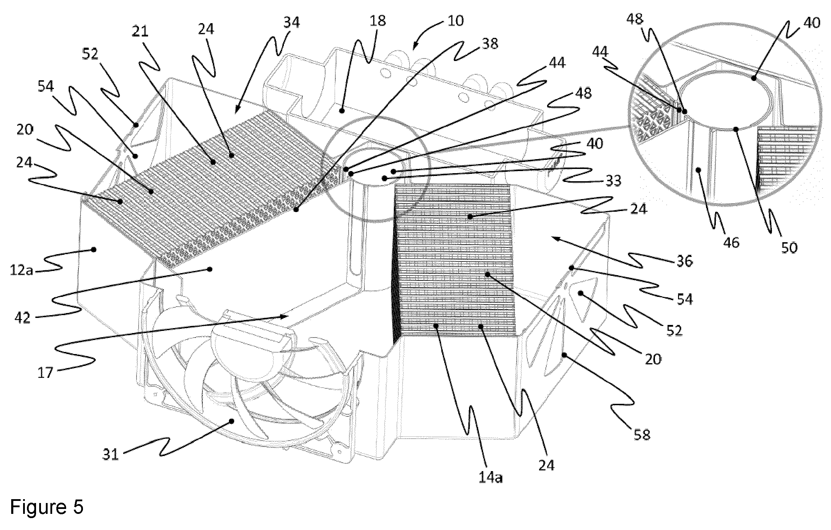

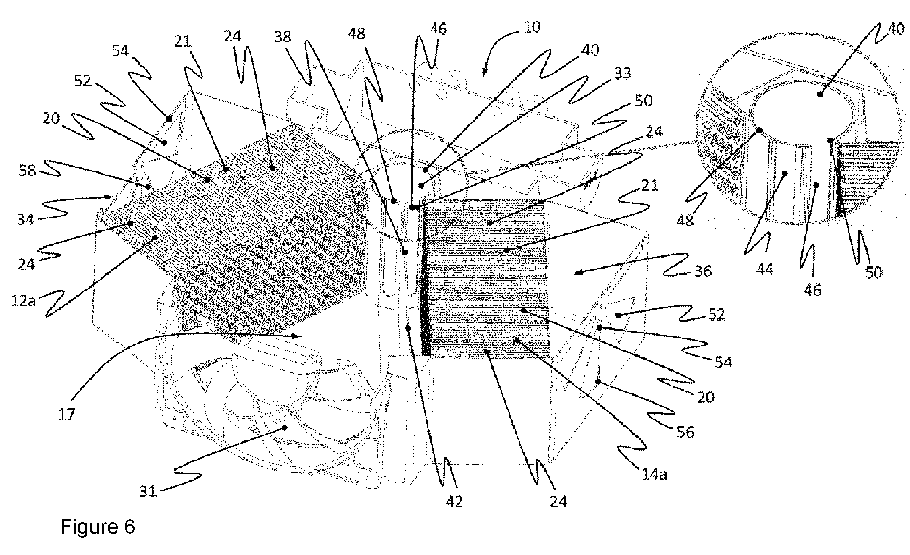

In Figures 5 and 6, there is shown a sectional view of the first sorption vessels 12a, 14a. The first sorption vessels 12a, 14a comprise a plurality of spaced apart aligned plates 20. The space between plates 20 is occupied by foam 21 capable of absorbing a sorption solution such as, for example, an alumina-zeolite foam. A plurality of exhaust vessel passages 24 suitable for the passage of air extend orthogonally to and through the plates 20, across each first sorption vessel 12a, 14a.

The sorption solution is a wet salt solution comprising a hygroscopic salt. The second sorption vessels 12b, 14b are capable of receiving fluid evaporated from the first sorption vessels 12a, 14a. The first 12a, 14a and second 12b, 14b sorption vessels are in fluid communication with one another via a sorption fluid passage 23 which connects the two vessels. Each pair of sorption vessels 12, 14 is a closed system.

The second sorption vessels 12b, 14b can act as condenser/evaporators. The second sorption vessels 12b, 14b are in heat exchange contact with first and second cooling circuits 30, 32, respectively. For the avoidance of any doubt, it should be understood that heat exchange contact means any arrangement in which heat can be transferred from the cooling circuits 30, 32 to their associated second sorption vessel 12b, 14b and vice-versa. In a preferred embodiment, each cooling circuit 30, 32 includes a coil portion which coils around the exterior of its respective second sorption vessel 12b, 14b.

The first and second cooling circuits 30, 32 are filled with a coolant such as an ammonia solution or liquid carbon dioxide. The cooling circuits 30, 32 are also in heat exchange contact with the cab 13, as will be described in more detail below, so that they can transport heat to the cab 13 or receive heat from the cab and transport heat away from the cab.

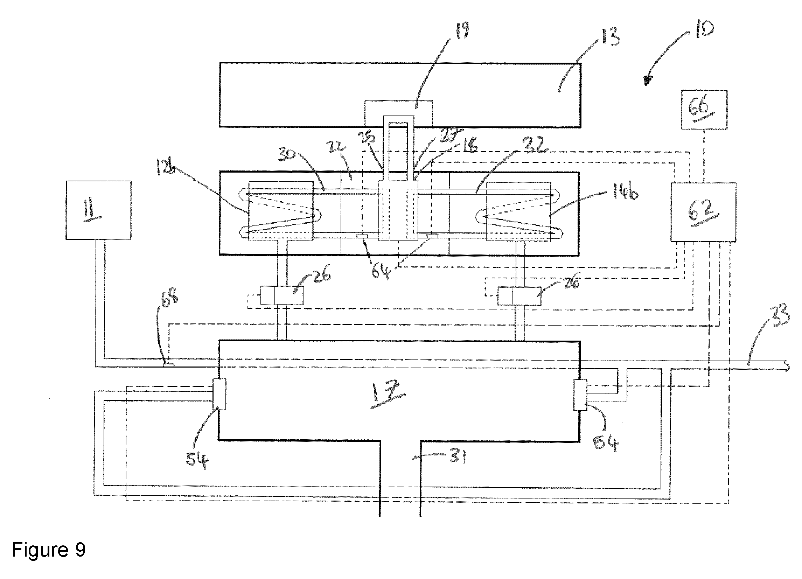

As best depicted in Figure 9, the first and second cooling circuits 30, 32 pass through a first control valve 18. The first control valve 18 may be a standard three-way valve of a known type. The first control valve 18 is located inside a manifold 22, depicted in Figure 9. The first control valve 18 selects whether coolant from the first or the second cooling circuit 30, 32 is directed to the cab 13 via the manifold outlet 25. The coolant is fed from the manifold outlet via a pipe 25 to an air conditioning unit 19 located inside the cab 13. The coolant returns to the manifold inlet 27 and back to the first control valve 18 via the pipe 25.

The flow of fluid through the sorption fluid passage 23 is controlled by a second control valve 26, which can move from an open position to a closed position and vice-versa. In the open position, fluid can move between the first 12a, 14a and second 12b, 14b sorption vessels and in the closed position fluid is prevented from moving between the first 12a, 14a and second 12b, 14b sorption vessels.

As shown in Figures 5 and 6, the cooling chamber 17 is in fluid communication with an air intake 31 which allows ambient air to flow into the cooling chamber 17. The cooling chamber 17 also includes an exhaust passage 33 which carries exhaust gases away from the internal combustion engine 11 of the vehicle, and extends through the cooling chamber 17. The cooling chamber 17 is divided into first and second chamber portions 34, 36 divided by a movable flap 38. The movable flap 38 includes a pivotable portion 40, and a body portion 42 which extends across the cooling chamber 17 and separates the first and second chamber portions 34, 36 from each other. The pivotable portion 40 depicted in Figures 5, 6 and 8 is a hollow cylindrical portion that extends around the circumference of the exhaust passage 33. The hollow cylindrical portion 40 is rotatable with respect to the exhaust passage 33 such that the body portion 42 is allowed to pivot. The pivot portion 40 includes first and second flap apertures 44, 46. The first flap aperture 44 is located on a first chamber side of the body portion 42, and the second flap aperture 46 is located on a second chamber side of the body portion 42.

The exhaust passage 33 includes first and second exhaust apertures 48, 50. The first and second flap apertures 44, 46 are formed such that can be selectively aligned with the associated exhaust apertures 48, 50. When one of the flap apertures 44, 46 is not aligned with its associated exhaust aperture 48, 50, the associated chamber portion is closed to exhaust gas flow from the exhaust passage 33. When one of the flap apertures 44, 46 is aligned with its associated flap aperture, the associated chamber portion is in fluid communication with the exhaust gas from the exhaust gas from the exhaust passage 33.

The movable flap 38 is movable between first and second positions by pivoting using the pivot portion 40. In the first position, as depicted in Figure 5, the first flap aperture 44 is aligned with the first exhaust aperture 48. Also in the first position, the movable flap 38 closes the first chamber portion 34 from the air intake, and the second flap aperture 46 is not aligned with the second exhaust aperture 50.

In the second position, as depicted in Figure 6, the second flap aperture 46 is aligned with the second exhaust aperture 50. Also in the second position, the movable flap 38 closes the second chamber portion 36 from the air intake 31, and the first flap aperture 44 is not aligned with the first exhaust aperture 48.

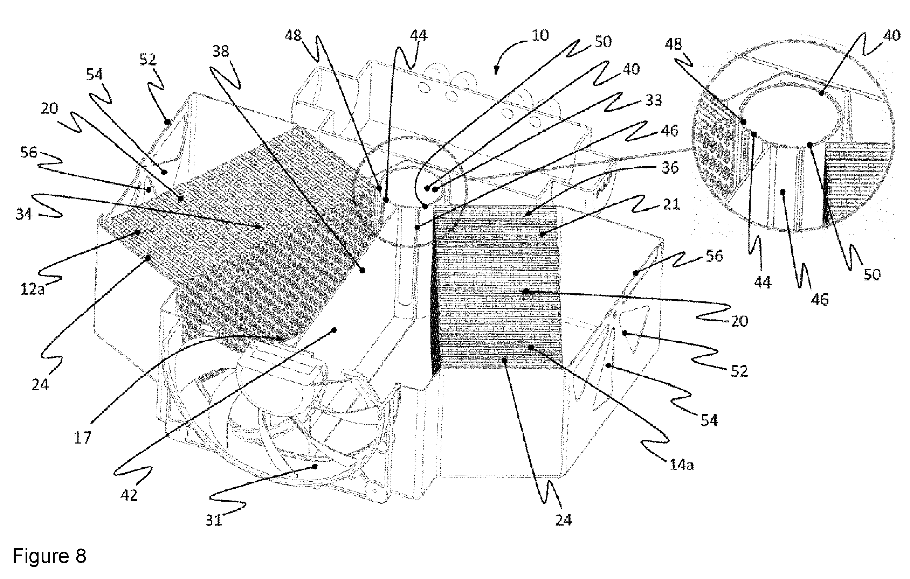

As depicted in Figure 8, the movable flap 38 is also movable into a third position by pivoting using the pivot portion 40. In the third position, the movable flap 38 is positioned such that the first and second flap apertures 44, 46 are not aligned with their respective exhaust apertures 48, 50, so the first and second chamber portions 34, 36 are closed to gas from the exhaust passage 33 and only receive ambient air from the air intake 31.

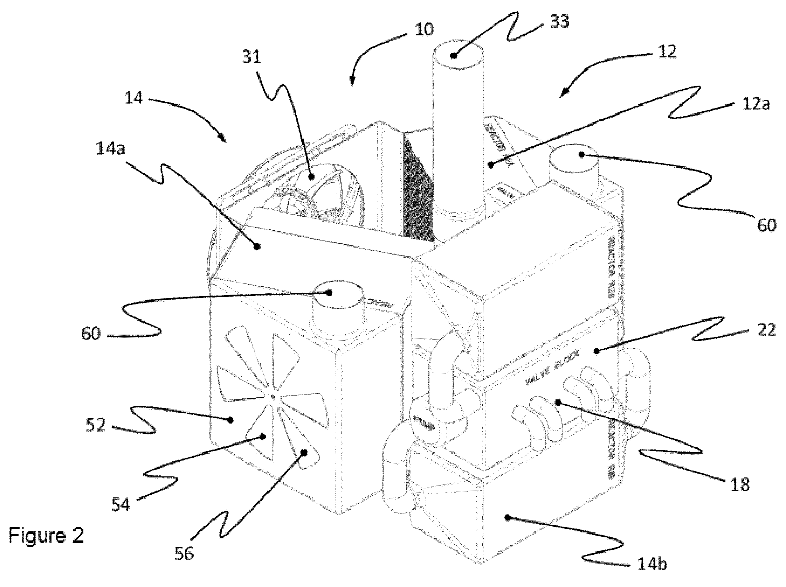

Referring to Figures 1 and 2, air outlets 52 are located downstream of the first sorption vessels 12a, 14b in the first and second chamber portions 34, 36. Outlet valves 54 are employed to control the flow out of the air outlets 52. The outlet valves 54 allow any fluid in one of the chamber portions 34, 36 to flow through the air outlet 52 when the outlet valve 54 is in an open position. The outlet valves 54 are operable to move to a closed position in which they prevent any fluid from passing through the air outlets 52. The actuation of the outlet valves 54 is controlled by the controller 62. When exhaust gas flows into one of the chamber portions 34, 36, the outlet valve 54 of that chamber portion is closed by the controller 62. When ambient air from the air intake 30 flows into one of the chamber portions 34, 36 the outlet valve 54 of that chamber portion is opened by the controller 62.

The outlet valves 54 are petal valves which include petals 56 that rotate to close and open petal apertures 58. When the outlet valves 54 are closed the exhaust gas flows out of the chamber portion through an outlet passage 60. The outlet passage 60 allows any exhaust gas in the first chamber portion 34 to be in fluid communication with the exhaust passage 33 downstream of the exhaust apertures 48, 50. The outlet passage 60 is in fluid communication with the exhaust passage 33 downstream of the first and second exhaust apertures 48, 50.

As depicted in Figure 9, the cooling system 10 may further include: a controller 62 and at least one temperature sensor 64. The controller 62 is adapted to control the movement of the movable flap 38 and the actuation of the first control valve 18, and is in communication with the temperature sensors 64 in a known way.

As depicted in Figure 9, there may be two temperature sensors 64 located in each of the first and second cooling circuits 30, 32. Alternatively, there may be a single temperature sensor 64 located in the vehicle cab 13 instead of, or in addition to the temperature sensors 64 located in each of the first and second cooling circuits 30, 32.

The controller 62 moves the moveable flap 38 and actuates the first control valve 18 in response to a signal received from the at least one temperature sensor 64. For example, if there are temperature sensors 64 located in each cooling circuit 30, 32 and/or a temperature sensor located in the cab 13, the controller 62 may move the flap 38 and control valve 18 if it receives a signal from the at least one temperature sensor 64 that the temperature of the cab 13 or one of the cooling circuits 30, 32 is above a pre-determined value.

The cooling system 10 may include a timer 66 in addition to, or instead of the at least one temperature sensor 64. The timer 66 is in communication with the controller 62 in a known way. The controller 62 may move the movable flap 38 and actuate the first control valve 18 when the timer 66 indicates that a predetermined period of time has elapsed.

The controller 62 may also be able to control the actuation of the second control valve 26 from the open position to the closed position, and vice-versa. The cooling system 10 may further comprise at least one exhaust temperature sensor 68 located in the exhaust passage 33 just upstream of the exhaust apertures 48. The exhaust temperature sensor 68 measures the temperature of the exhaust gas flowing into the chamber portions when the moveable flap 38 is in the first or second position respectively. The exhaust temperature sensor 68 is in communication with the controller 62 in a known way. When the controller 62 receives a signal from the exhaust temperature sensor 68 that the temperature of the exhaust gas has reached a pre-determined value, the controller 62 opens the second control valve 26. This allows vapour to flow from one of the first sorption vessels 12a, 14a to its respective second sorption vessel 12b, 14b when the second control valve 26 is opened by the controller 62.

### Industrial Applicability

With reference to Figures 1 to 9, a method of continuously cooling a vehicle cab using the previously described cooling system will now be described.

Firstly, the movable flap 38 is moved by the controller 62 into the first position, as depicted in Figure 5, such that the first flap aperture 44 is aligned with the first exhaust aperture 48. This allows exhaust gas to flow into the first chamber portion 34, and through the exhaust vessel passages 24 of the first sorption vessel 12a. The outlet valves 54 in the first chamber portion 34 are controlled by the controller such that the outlet valves 54 in the first chamber portion prevent exhaust gas downstream of the exhaust vessel passages 24 in the first chamber portion from flowing out of the air outlets 52, and only allow exhaust gas to exit through the outlet passage 60. The exhaust gas flowing through the exhaust vessel 24 causes the liquid of the sorption solution to evaporate leaving behind the salt of the sorption solution. When the controller 62 receives a signal from the exhaust temperature sensor 68 that the temperature of the exhaust gas has reached a pre-determined temperature, the controller opens the second control valve 26 allowing the vapour to flow into the second sorption vessel 12b. The vapour then condenses inside the second sorption vessel 12b.

The evaporation can continue until all of the sorption liquid has evaporated from the first sorption 12a vessel. While condensed sorption liquid is held in the second sorption vessel 12b, the second sorption vessel 12b is in heat exchange contact with, and provides a cooling effect to, the coolant in the first cooling circuit 30. At the same time as the movable flap 38 is moved into the first position, the controller 62 actuates the first control valve 18 to direct coolant from the first cooling circuit 30 to the cab 13.

Also in the first position, the second flap aperture 46 is not aligned with the second exhaust aperture 50, and only ambient air from outside the chamber flows from the air intake 31 through the second chamber portion 36. The outlet valves 54 in the second chamber portion 36 are controlled by the controller 62 such that they are open and allow ambient air to flow through air outlets 52. The outlet valves 54 in the first chamber portion 34 are controlled by the controller 62 such that they are closed.

After a pre-determined period of time indicated by the timer or in response to a signal from the at least one temperature sensor 64 that the cab 13 or one of the cooling circuits 30, 32 has reached a pre-determined temperature, the controller 62 moves the moveable flap 38 into the second position such that the second flap aperture 46 aligns with the second exhaust aperture 50 and exhaust gas is allowed to flow into the second chamber portion 36 and now prevented from entering the first chamber portion 34. The exhaust gas flows through the exhaust vessel passages 24 of the first sorption vessel 14a. The outlet valves 54 in the second chamber portion are controlled by the controller such that they prevent exhaust gas downstream of the exhaust vessel passages 24 in the second chamber portion from exiting out of the air outlets 52, and only allow exhaust gas to exit through the outlet passage 60. The exhaust gas flowing through the exhaust vessel passages 24 causes the liquid of the sorption solution to evaporate leaving behind the salt of the sorption solution. When the controller 62 receives a signal from the exhaust temperature sensor 64 that the temperature of the exhaust gas has reached a pre-determined temperature, the controller 62 opens the second control valve 26 of the second pair of sorption vessels 14 allowing the vapour to flow into the second sorption vessel 14b. The vapour then condenses inside the second sorption vessel 14b.

The evaporation can continue until all of the sorption liquid has evaporated from the first sorption vessel 14a. While condensed sorption liquid fluid is held in the second sorption vessel 14b, the second sorption vessel 14b is in heat exchange contact with, and provides a cooling effect to, the coolant in the second cooling circuit 32. At the same time as the movable flap 38 is moved into the second position, the controller 62 actuates the first control valve 18 to direct coolant from the second cooling circuit 32 to the cab 13.

Also in the second position, the first flap aperture 44 is not aligned with the first exhaust aperture 48, and only ambient air from outside the chamber flows from the air intake 31 through the first chamber portion 34. The outlet valves 54 in the first chamber portion 34 are controlled by the controller 62 such that they are open and allow the ambient air to flow through the exhaust vessel passages 24 in the first chamber portion 34 and through the air outlets 52. The outlet valves 54 in the second chamber portion 36 are controlled by the controller 62 such that they are closed.

After a pre-determined period of time indicated by the timer 66 or in response to a signal from the temperature sensor 64 that the cab 13 or one of the cooling circuits 30, 32 has reached a certain temperature, the controller 62 moves the moveable flap 38 into the first position to repeat the method of continuously cooling a vehicle cab.

If the cooling system 10 is not required, for example, if the air conditioning unit 19 is switched off, the moveable flap 38 can be moved into the third position, as depicted in Figure 8, where only ambient air flows into the cooling chamber 34.

Because the continuous cooling system according to the present invention employs a cooling chamber and a movable flap to selectively divert ambient air or exhaust gas to the first sorption vessels, the cooling system detailed herein is less complicated and consequently less costly to manufacture.

In addition, the movable flap is less susceptible to wear and changes in tolerances than three-way valves arrangements.

The cooling system disclosed herein can be used in any vehicle comprising: an internal combustion engine and a cab. For example, the vehicle may be a car, truck, tractor or plane.

Modifications and improvements may be incorporated without departing from the scope of the invention, which is defined by the appended claims.

It should be understood that a plurality of first and second flap apertures and a plurality of first and second exhaust apertures may be used to achieve the effect of the invention described herein.

It should be understood that the exhaust temperature sensor may be located in one of the exhaust vessel passages.

## Claims

1. A cooling system for a vehicle cab where the vehicle has an internal combustion engine, the system comprising:
a cooling chamber having an ambient air intake;
first and second pairs of sorption vessels, each pair of sorption vessels comprising a first sorption vessel containing a sorption solution which is located in the cooling chamber and is in fluid communication with a second sorption vessel located outside the cooling chamber;
first and second cooling circuits, each circuit containing a coolant and being in heat exchange contact with a respective one of the second sorption vessels;
a first control valve which selectively directs coolant from the first or the second cooling circuit towards the cab;
an exhaust passage conveying exhaust gases away from the engine, the exhaust passage having at least one exhaust aperture in communication with the cooling chamber;
and
a moveable flap located within the cooling chamber so as to divide the cooling chamber into a first chamber portion containing one of the first sorption vessels, and a second chamber portion containing the other of the first sorption vessels,
wherein the moveable flap is moveable between: (i) a first position in which exhaust gas flows from the at least one exhaust aperture through the first chamber portion whilst ambient air flows from the air intake through the second chamber portion, and (ii) a second position in which exhaust gas flows from the at least one exhaust aperture through the second chamber portion whilst ambient air flows from the air intake through the first chamber portion.

2. The cooling system according to claim 1, wherein the exhaust passage comprises first and second exhaust apertures, and the moveable flap comprises corresponding first and second flap apertures, wherein when the moveable flap is in the first position the first flap aperture is aligned with the first exhaust aperture and the second exhaust aperture is closed, and wherein when the moveable flap is in the second position the second flap aperture is aligned with the second exhaust aperture and first exhaust aperture is closed.

3. The cooling system according to either preceding claim, wherein the movable flap can move to a third position in which the at least one exhaust aperture is closed and ambient air flows from the air intake through both the first and second chamber portions.

4. The cooling system according to any preceding claim, wherein the cooling system further comprises: a controller adapted to control the movement of the moveable flap and actuation of the first control valve; and at least one temperature sensor located in the cab or in each of the first and second cooling circuits, wherein the controller moves the moveable flap and actuates the first control valve in response to a signal from the at least one temperature sensor.

5. The cooling system according to any of claims 1 to 3, wherein the cooling system further comprises: a controller adapted to control the movement of the moveable flap and the actuation of the first control valve; and a timer, wherein the controller moves the moveable flap and actuates the first control valve after the timer indicates that a predetermined time period has elapsed.

6. The cooling system according to claim 4 or 5, wherein the first and second chamber portions comprise: respective first and second air outlets downstream of the first sorption vessels; and first and second outlet valves which control air flow through the air outlets, wherein controller moves the first and second outlet valves from an open position to a closed position when the moveable flap moves to the first or second position, respectively.

7. The cooling system according to any of claim 4 to 6, wherein each pair of sorption vessels further comprises: a second control valve which controls the fluid flow between each pair of sorption vessels; and the cooling system further comprises: an exhaust temperature sensor adapted to measure the temperature of the exhaust gas, wherein the controller opens one of the second control valves actuates in response to a signal from the exhaust temperature sensor that the temperature of the exhaust gas has reached a pre-determined value.

8. A vehicle comprising:
an internal combustion engine;
a cab; and
the cooling system as claimed in any of the preceding claims.

9. A method of continuously cooling a vehicle cab where the vehicle comprises:
an internal combustion engine;
a cooling chamber having an ambient air intake;
first and second pairs of sorption vessels, each pair of sorption vessels comprising a first sorption vessel containing a sorption solution which is located in the cooling chamber and is in fluid communication with a second sorption vessel located outside the cooling chamber;
first and second cooling circuits, each circuit containing a coolant and being in heat exchange contact with a respective one of the second sorption vessels;
a first control valve which selectively directs coolant from the first or the second cooling circuit towards the cab;
an exhaust passage conveying exhaust gases away from the engine, the exhaust passage having at least one exhaust aperture in communication with the cooling chamber; and
a moveable flap located within the cooling chamber so as to divide the cooling chamber into a first chamber portion containing one of the first sorption vessels, and a second chamber portion containing the other of the first sorption vessels; the method comprising the steps of:
(i) moving the moveable flap to a first position in which exhaust gas flows from the at least one exhaust aperture through the first chamber portion whilst ambient air flows from the air intake through the second chamber portion;
(ii) simultaneously actuating the first control valve such that coolant is directed from the first cooling circuit towards the cab;
(iii) after a predetermined period of time or in response to a control signal moving the moveable flap from the first position to a second position in which exhaust gas flows from the at least one exhaust aperture through the second chamber portion whilst ambient air flows from the air intake through the first chamber portion;
(iv) simultaneously actuating the first control valve such that coolant is directed from the second cooling circuit towards the cab; and
(v) after a predetermined period of time or in response to a control signal repeating steps (i)-(iv).

10. The method of continuously cooling a vehicle cab according to claim 9, wherein the control signal of steps (iii) and (v) comes from at least one temperature sensor located in the cab or in each of the first and second cooling circuits.

11. The method of continuously cooling a vehicle cab according to claim 9 or 10, wherein each pair of sorption vessels further comprises: a second control valve which controls the fluid flow between each pair of sorption vessels; and the cooling system further comprises: an exhaust temperature sensor adapted to measure the temperature of the exhaust gas,
wherein the method further comprises the step of:
opening one of the second control valves in response to a signal from the exhaust temperature sensor that the temperature of the exhaust gas has reached a pre-determined temperature.
